(19) **Europäisches Patentamt European Patent Office Office européen des brevets**

(11) **EP 1 219 571 B1**

(12) **EUROPEAN PATENT SPECIFICATION**

(45) Date of publication and mention of the grant of the patent:
**18.04.2012  Bulletin 2012/16**

(51) Int Cl.:
***C03B 19/14*** (2006.01)   ***C03C 3/06*** (2006.01)

(21) Application number: **01310743.8**

(22) Date of filing: **21.12.2001**

(54) **process for producing a synthetic quartz glass article**

Verfahren zur Herstellung einem Element aus Quarzglas

Procédé de fabrication d'un élément en verre de silice

(84) Designated Contracting States:
**DE FR GB**

(30) Priority: **26.12.2000  JP 2000396151**

(43) Date of publication of application:
**03.07.2002  Bulletin 2002/27**

(73) Proprietor: **Shin-Etsu Chemical Co., Ltd.
Chiyoda-ku
Tokyo (JP)**

(72) Inventors:
 • **Matsuo, Koji,
c/o Speciality Chemicals Research Center,
Kubiki-mura,
Nakakubiki-gun,
Niigata-ken, (JP)**
 • **Yamada, Motoyuki,
c/o Speciality Chemicals research Center,
Kubiki-mura,
Nakakubiki-gun,
Niigata-ken, (JP)**

(74) Representative: **Stoner, Gerard Patrick et al
Mewburn Ellis LLP
33 Gutter Lane
London
EC2V 8AS (GB)**

(56) References cited:
**WO-A-00/48046    WO-A-00/55100**

**Description**

The present invention relates to processes for producing synthetic quartz glass articles suitable for lithography in a wavelength region of less than 400 nm, especially the vacuum ultraviolet region.

BACKGROUND

Synthetic quartz glass having high UV transmittance plays the main role as optical members in the lithographic process for semiconductor manufacture.

The role of synthetic quartz glass in the lithographic system includes stepper lenses and reticle or photomask substrates which are used in the exposure and transfer steps of circuit patterns to silicon wafers.

The stepper apparatus generally includes an illumination section, a projection lens section and a wafer drive section. The illumination section converts light emitted by a light source into light of uniform intensity and guides it onto a reticle. The projection lens section plays the role of focusing the circuit pattern of the reticle onto a wafer in an accurate and reduced fashion. The materials of such components are required to be not only highly transmissive to light from the light source, but also optically homogeneous so that the transmitted light may have a uniform intensity.

As LSI chips continue to become more versatile and higher performing, research and development is actively underway to increase the level of device integration on wafers. Achieving higher device integration requires a high optical resolution capable of transferring very fine patterns. The resolution is represented by equation (1).

$$R = k_1 \times \lambda/NA \qquad\qquad (1)$$

R: resolution
$k_1$: coefficient
λ: wavelength of the light source
NA: numerical aperture

Equation (1) suggests that there are two ways to achieve a high resolution. One way is to increase the numerical aperture. Increasing the numerical aperture, however, entails a reduction of focal depth. The currently used numerical aperture is thus thought to be almost the limit. The other way is to shorten the wavelength of the light source. Today, the predominant ultraviolet radiation utilized as the light source has a wavelength of 248 nm (KrF excimer laser). Intensive efforts are being made to move to the shorter wavelength 193 nm (ArF excimer laser), and a further reduction to wavelength 157 nm ($F_2$ excimer laser) is considered promising for the not-too-distant future.

As the material used in the wavelength region below 200 nm, known as the vacuum ultraviolet region, calcium fluoride single crystal is presumably employable if transmittance is the only consideration. However, many problems including material strength, a coefficient of thermal expansion, and surface polishing necessary for use as lenses must be overcome before calcium fluoride single crystal can be used at the practical level. Therefore, synthetic quartz glass is expected to play a very important role as a stepper component material in the future.

Even for quartz glass having high UV transmittance, the transmittance gradually decreases in the vacuum UV region below 200 nm, and ceases altogether near 140 nm which is the absorption band attributable to the inherent structure of quartz glass.

The transmittance of quartz glass in the range approaching the inherent absorption region is determined by the type and concentration of defect structures in the quartz glass. With respect to the $F_2$ excimer laser having a light source wavelength of 157 nm, defect structures which affect transmittance include primarily Si-Si bonds and Si-OH bonds. Si-Si bonds, sometimes referred to as "oxygen deficiency defects," have the central wavelength of absorption at 163 nm. Because these oxygen deficiency defects are also precursors of Si defect structures (known as E' centers) which have an absorption band at 215 nm, they cause serious problems not only when $F_2$ (157 nm) is used as the light source, but also on use of KrF (248 nm) or ArF (193 nm). Si-OH bonds exhibit an absorption band near 160 nm. Therefore, the formation of these defect structures must be minimized in order to produce quartz glass having a high transmittance in the vacuum UV region.

In the course of earlier research aimed at solving the above problem, quartz glass was produced by flame hydrolysing a silica-forming reactant gas to form a porous silica matrix, then melting and vitrifying the porous silica matrix in a fluorine compound gas atmosphere. This method is successful in eliminating Si-OH bonds and instead, creating Si-F bonds in quartz glass. Si-F bonds are tenacious bonds with great bond energy, and have no absorption band at 150 to 170 nm. As a consequence, quartz glass doped with fluorine by the above method has high transmittance to vacuum UV radiation from an $F_2$ excimer laser (157 nm).

Document WO 00/55689 discloses a process for producing quartz glass comprising the steps of flame hydrolysing a silica-forming reactant gas to form a porous silica matrix, then melting and vitrifying the porous silica matrix in a fluorine compound gas atmosphere. The glass is then heated and shaped before being polished to obtain lithography photomask blanks.

Nevertheless, when the synthetic quartz glass thus obtained is shaped into substrates, there is often optical heterogeneity such as a distribution of transmittance in the substrate plane, a very high birefringence or the like. If optically heterogeneous substrates are used as a reticle, for example, images transferred therefrom are partially blurred. This inhibits the use of such materials as reticles. It is thus desired to have a process of producing synthetic quartz glass having optical homogeneity as well as high transmittance.

## SUMMARY

An object of the invention is to provide a process for producing an optically homogeneous synthetic quartz glass article having a high transmittance to vacuum UV light below 200 nm, a low birefringence and a small refractive index distribution.

We have found that by molding a vitrified synthetic quartz glass ingot after removing a surface portion thereof, there is obtained an optically homogeneous synthetic quartz glass article having a high transmittance to vacuum UV light below 200 nm as emitted by an ArF or $F_2$ excimer laser, a low birefringence and a small refractive index distribution.

According to the invention, as specified in claim 1, there is provided a process for producing a fluorine-containing synthetic quartz glass article, comprising the steps of feeding a silica-forming reactant gas, hydrogen gas, oxygen gas, and optionally, a fluorine compound gas from a burner to a reaction zone, flame hydrolysing the silica-forming reactant gas in the reaction zone to form fine particles of silica, depositing the silica particles on a rotatable substrate in the reaction zone to form a porous silica matrix, heating and vitrifying the porous silica matrix in a fluorine compound gas-containing atmosphere to form a synthetic quartz glass ingot, and heating and shaping the ingot into a synthetic quartz glass article. A surface portion of the synthetic quartz glass ingot is removed before the heating and shaping step.

The ingot has a diameter defining an outer periphery and a length between longitudinal opposite ends. The surface portion removed amounts to at least 5% of the outer peripheral diameter and, at each of the opposite end surfaces, at least 2.5% of the longitudinal length between them. In a preferred embodiment, the surface portion of the synthetic quartz glass ingot which is removed is up to 50% of the diameter of the ingot at the outer periphery and up to 50% of the length, in total, at the opposite ends.

A synthetic quartz glass article obtained by or obtainable by the above process should preferably have a birefringence of up to 10 nm/cm; a refractive index distribution of up to $5 \times 10^{-4}$; a minimum transmittance of at least 80.0% to light having a wavelength of 157.6 nm; a transmittance distribution of up to 1.0% to light having a wavelength of 157.6 nm; a minimum transmittance of at least 90.0% to light having a wavelength of 193.4 nm; and/or a transmittance distribution of up to 1.0% to light having a wavelength of 193.4 nm.

## BRIEF DESCRIPTION OF THE DRAWING

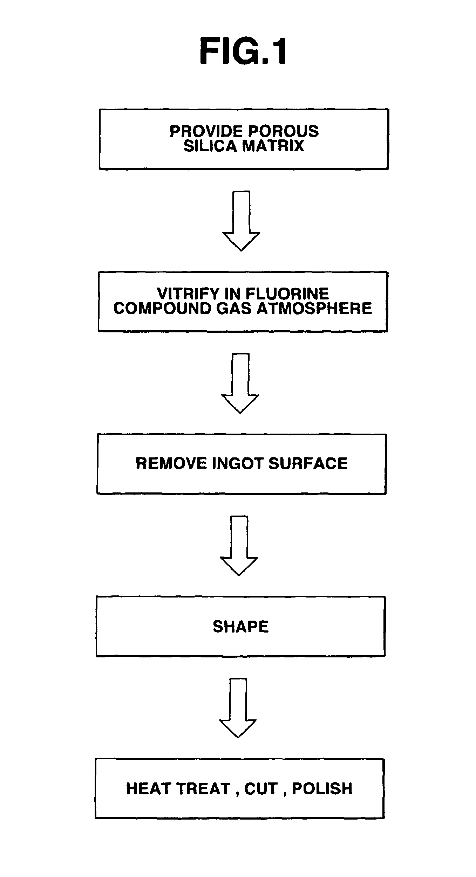

The only figure, FIG. 1 is a block flow diagram of the process for producing a synthetic quartz glass article according to the invention.

## DESCRIPTION OF THE PREFERRED EMBODIMENT

The invention is directed to producing a fluorine-containing synthetic quartz glass article having a high transmittance to vacuum UV radiation and optical homogeneity and a process for producing the same.

To increase the transmittance of quartz glass to vacuum UV radiation, quartz glass must be doped with fluorine atoms to create Si-F bonds in the glass structure. This is because the creation of Si-F bonds, in turn, reduces the number of Si-Si bonds and Si-OH bonds capable of absorbing vacuum UV radiation. In addition, Si-F bonds are highly resistant to UV radiation on account of their substantial bond energy.

The process for producing a fluorine-containing synthetic quartz glass article is illustrated in the block flow diagram of FIG. 1. A first step is to provide a porous silica matrix. A second step is to vitrify the porous silica matrix in a fluorine compound gas atmosphere into a quartz glass ingot. A third step is to remove a surface portion, specifically peripheral and end portions, of the quartz glass ingot by grinding and/or cutting. A fourth step is to shape the surface-removed ingot. A fifth step is a finish treatment including heat treatment, cutting and polishing. As opposed to the prior art process where the vitrified ingot directly proceeds to the molding step, the present process involves the step of removing a surface portion of the ingot as by grinding or cutting prior to the molding step.

The respective steps are described in detail.

The first step of providing a porous silica matrix involves feeding a silica-forming reactant gas, hydrogen gas, and oxygen gas or a silica-forming reactant gas, hydrogen gas, oxygen gas and a fluorine compound gas from a burner to a reaction zone, flame hydrolysing the silica-forming reactant gas in the reaction zone to form fine particles of silica, and depositing the silica particles on a rotatable substrate in the reaction zone to form a porous silica matrix. In the second step, the porous silica matrix is heated and vitrified in a fluorine compound gas-containing atmosphere to form a synthetic quartz glass ingot. The process to this stage is per se known and may be carried out under known conditions. For example, the flow rates of oxygen gas, hydrogen gas, silica-forming reactant gas and fluorine compound gas are selected in conventional flow rate ranges.

The silica-forming reactant used herein may be selected from well-known silicon compounds including chlorosilanes such as silicon tetrachloride, alkoxysilanes such as tetramethoxysilane and siloxanes such as hexamethyldisiloxane. Of these, the alkoxysilanes free of chlorine are preferred because Si-Cl bonds absorb UV radiation. The fluorine compound may be selected from $SiF_4$, $CHF_3$, and $CF_4$, to name a few.

The porous silica matrix resulting from flame hydrolysis reaction is then heated for vitrification in a furnace having an atmosphere of the fluorine compound gas, or a mixture thereof with an inert gas (eg. helium or argon). The vitrifying temperature is preferably in the range of 1,200°C to 1,700°C although appropriate vitrifying temperature and time depend on the concentration of fluorine compound gas in the vitrifying atmosphere, the density of the porous silica matrix and other factors. Following vitrification, the quartz glass is cooled to room temperature within the same furnace by quenching, controlled slow cooling or allowing to cool.

The synthetic quartz glass thus obtained preferably has a fluorine content of 0.01 to 2.4% by weight, and especially 0.1 to 1.5% by weight at the center thereof.

The synthetic quartz glass thus obtained is shaped and further processed as by heat treatment, cutting and polishing, into an optical article suitable for lithography. When substrates are produced in this way according to the prior art process, many of the substrates are optically heterogeneous as demonstrated by a distribution of transmittance or refractive index within the substrate plane and a substantial birefringence. Optical heterogeneity is apt to occur upon vitrification of the porous silica matrix. As quartz glass is doped with fluorine in the course of vitrification, the fluorine doping takes place from the outer periphery of the matrix. This invites a differential fluorine concentration between the interior and the outer periphery of the ingot at the end of vitrification. Opposite ends of the matrix correspond to the start and end of growth of the matrix and tend to have a density difference from a straight barrel portion relying on continuous growth. Such a difference of matrix density often inhibits uniform fluorine doping even when vitrification is carried out under the same conditions.

As a result, the ingot as vitrified has a distribution of fluorine concentration. Direct molding and annealing of this ingot almost fails to produce an optically homogeneous article.

If the fluorine concentration of quartz glass varies, the strain point and annealing point thereof also vary. A single ingot then includes portions which are effectively annealed and portions which are not effectively annealed under preset annealing conditions, and even portions which are made more heterogeneous by the annealing. This is the reason why the substrates produced by the prior art process are optically heterogeneous.

With this taken into account, we have discovered that if a surface portion of the ingot which has a fluorine concentration largely different from that of the central portion of the ingot is removed from the ingot, this surface-removed ingot to be shaped has a minimized distribution of fluorine concentration so that the effect of annealing is exerted throughout the ingot.

The removal of the surface portion is also advantageous since the birefringence of the ingot is smaller in proximity to the center.

The technique of removing a surface portion of the synthetic quartz glass ingot prior to molding may be grinding, cutting or the like. It is noted that the ingot has a diameter defining the outer periphery and a length between longitudinal opposite ends corresponding to the start and end of growth of the matrix. In one preferred embodiment, the surface portion of the synthetic quartz glass ingot which is removed at the outer periphery is up to 50%, preferably up to 30%, and more preferably up to 10% of the ingot diameter. Similarly, the surface portion of the ingot which is removed at the opposite ends is up to 50%, preferably up to 30%, and more preferably up to 10% of the ingot length, provided that the cut distances at the opposite ends are combined. Understandably, the extent of the surface portion of the synthetic quartz glass ingot which is removed is preferably selected so that the desired birefringence, refractive index distribution, transmittance and transmittance distribution to be described below may be accomplished. The cut distances at opposite ends are properly selected in accordance with a particular purpose and can be equal, for example, though not limited thereto.

The synthetic quartz glass ingot ground and cut in this way is then shaped in an electric or similar furnace and then processed through steps of heat treatment, cutting and polishing into an optical article for lithographic use.

The synthetic quartz glass article produced by the inventive process finds use as lenses, substrates and blanks, while it preferably has physical properties as discussed below.

Birefringence is measured by optical heterodyne detection using a He-Ne laser of 633 nm wavelength, and its value is preferably up to 10 nm/cm, more preferably up to 5 nm/cm, and even more preferably up to 1 nm/cm. It is noted that since the birefringence is dependent on wavelength, the birefringence at the actual wavelength of 157.6 nm and 193.4 nm is calculated by conversion from the measurement at the wavelength of 633 nm (see Physics and Chemistry of Glasses 19 (4), 1978).

The distribution of refractive index is measured by optical interferometry using a He-Ne laser of 633 nm wavelength, and its value is preferably up to $5 \times 10^{-4}$, more preferably up to $1 \times 10^{-4}$, and even more preferably up to $1 \times 10^{-5}$.

Transmittance is measured by a spectrophotometer. At the wavelength of 157.6 nm, the minimum transmittance is preferably at least 80.0%, more preferably at least 83.0%, and even more preferably at least 84.0%. At the wavelength of 193.4 nm, the minimum transmittance is preferably at least 90.0%, more preferably at least 90.4%, and even more preferably at least 90.6%.

The distribution of transmittance at the wavelength of 157.6 nm is up to 1.0%, more preferably up to 0.5%, and even more preferably up to 0.3%. The distribution of transmittance at the wavelength of 193.4 nm is up to 1.0%, more preferably up to 0.5%, and even more preferably up to 0.2%.

EXAMPLE

Examples of the invention and comparative examples are given below by way of illustration, and not by way of limitation. The parameters used in the examples are not intended to restrict the scope of the invention.

Example 1

A porous silica matrix was produced by feeding from a burner hydrogen gas, oxygen gas, and tetramethoxysilane gas as the silica-forming reactant, and carrying out hydrolysis in an oxyhydrogen flame. The matrix was heated to 1,500°C in an atmosphere of $SiF_4$ and He mixture, forming a cylindrical synthetic quartz glass ingot.

The outer periphery of the ingot was removed by cylindrical grinding in an amount of 25% of the outer diameter, and the opposite ends of the ingot were removed each in an amount of 10% of the longitudinal length, and 20% in total. The ingot whose peripheral and end portions had been removed was shaped in an electric furnace, finally obtaining a substrate of 152.4 mm square and 6.35 mm thick.

The substrate had a transmittance as measured at 157.6 nm of 84.0 to 84.5% within the substrate plane. The transmittance measured at 193.4 nm was 90.60 to 90.75% within the substrate plane. The birefringence was 3 nm/cm. The refractive index distribution was $1 \times 10^{-4}$.

Example 2

A porous silica matrix was produced by feeding from a burner hydrogen gas, oxygen gas, and tetramethoxysilane gas as the silica-forming reactant, and carrying out hydrolysis in an oxyhydrogen flame. The matrix was heated to 1,500°C in an atmosphere of $SiF_4$ and He mixture, forming a cylindrical synthetic quartz glass ingot.

The outer periphery of the ingot was removed by cylindrical grinding in an amount of 5% of the outer diameter, and the opposite ends of the ingot were removed each in an amount of 2.5% of the longitudinal length, and 5% in total. The ingot whose peripheral and end portions had been removed was shaped in an electric furnace, finally obtaining a substrate of 152.4 mm square and 6.35 mm thick.

The substrate had a transmittance as measured at 157.6 nm of 83.5 to 84.5% within the substrate plane. The transmittance measured at 193.4 nm was 90.50 to 90.70% within the substrate plane. The birefringence was 10 nm/cm. The refractive index distribution was $3 \times 10^{-4}$.

Example 3

A porous fluorine-containing silica matrix was produced by feeding from a burner hydrogen gas, oxygen gas, tetramethoxysilane gas as the silica-forming reactant, and $SiF_4$ gas, and carrying out hydrolysis in an oxyhydrogen flame. The matrix was heated to 1,500°C in an atmosphere of $SiF_4$ and He mixture, forming a cylindrical synthetic quartz glass ingot.

The outer periphery of the ingot was removed by cylindrical grinding in an amount of 10% of the outer diameter, and the opposite ends of the ingot were removed each in an amount of 5% of the longitudinal length, and 10% in total. The ingot whose peripheral and end portions had been removed was shaped in an electric furnace, finally obtaining a substrate of 152.4 mm square and 6.35 mm thick.

The substrate had a transmittance as measured at 157.6 nm of 84.2 to 84.9% within the substrate plane. The transmittance measured at 193.4 nm was 90.55 to 90.75% within the substrate plane. The birefringence was 7 nm/cm. The refractive index distribution was $2 \times 10^{-4}$.

Comparative Example 1

A porous silica matrix was produced by feeding from a burner hydrogen gas, oxygen gas, and tetramethoxysilane gas as the silica-forming reactant, and carrying out hydrolysis in an oxyhydrogen flame. The matrix was heated to 1,500°C in an atmosphere of $SiF_4$ and He mixture, forming a cylindrical synthetic quartz glass ingot.

The ingot was shaped in an electric furnace without grinding and cutting. There was obtained a substrate 152.4 mm square and 6.35 mm thick.

The substrate had a transmittance as measured at 157.6 nm of 75.0 to 83.5% within the substrate plane. The transmittance measured at 193.4 nm was 89.50 to 90.70% within the substrate plane. The birefringence was 65 nm/cm. The refractive index distribution was $8 \times 10^{-4}$.

There has been described a process involving the steps of removing a surface portion from a synthetic quartz glass ingot as vitrified, and then molding the surface-removed ingot. An optically homogeneous synthetic quartz glass article is produced having a high transmittance to vacuum UV radiation below 200 nm like ArF or $F_2$ excimer laser light as well as a low birefringence, and a small refractive index distribution.

Although some preferred embodiments have been described, many modifications and variations may be made thereto in light of the above teachings. It is therefore to be understood that the invention may be practised otherwise than as specifically described without departing from the scope of the appended claims.

**Claims**

1.   A process for producing a fluorine-containing synthetic quartz glass article, comprising the steps of:

(a) feeding a silica-forming reactant gas, hydrogen gas, oxygen gas, and optionally, a fluorine compound gas from a burner to a reaction zone;
(b) flame hydrolysing the silica-forming reactant gas in the reaction zone to form fine particles of silica;
(c) depositing the silica particles on a rotatable substrate in the reaction zone to form a porous silica matrix;
(d) heating the porous silica matrix in a fluorine compound gas-containing atmosphere, thereby vitrifying it to form a synthetic quartz glass ingot having opposite end surfaces and a circumferential outer peripheral surface having a diameter, and
(e) heating and shaping the vitrified ingot into a synthetic quartz glass article;

**characterised in that**
before the heating and shaping step (e) a surface portion of the vitrified ingot is removed, amounting to at least 5% of said outer peripheral diameter and, at each of said opposite end surfaces, at least 2.5% of the longitudinal length between them.

2.   A process according to claim 1 in which surface portion removed from the outer peripheral surface amounts to not more than 50% of the diameter of the vitrified ingot.

3.   A process according to claim 2 in which the surface portion removed from the outer peripheral surface amounts to not more than 30% of the diameter of the vitrified ingot.

4.   A process according to any one of the preceding claims in which surface portion removed at the opposite ends of the vitrified ingot amounts to not more than 50% of its length.

5.   A process according to claim 4 in which surface portion removed at the opposite ends of the vitrified ingot amounts to not more than 30% of its length.

6.   A process according to any one of the preceding claims in which the surface portion is removed by grinding and/or cutting.

7.   A process according to any one of the preceding claims in which the quartz glass ingot of step (e) is heat treated, cut and polished to make said article which is an optical article for lithography.

**Patentansprüche**

1. Verfahren zur Herstellung eines Gegenstands aus fluorhältigem synthetischem Quarzglas, folgende Schritte umfassend:

(a) Zuführen eines Silica bildenden Reaktionsgases, Wasserstoffgases, Sauerstoffgases und gegebenenfalls eines Fluorverbindungsgases von einem Brenner zu einer Reaktionszone,
(b) Flammenhydrolysieren des Silica bildenden Reaktionsgases in der Reaktionszone, um feine Silicateilchen zu bilden,
(c) Abscheiden der Silicateilchen auf einem rotierbaren Substrat in der Reaktionszone, um eine poröse Silicamatrix zu bilden,
(d) Erhitzen der porösen Silicamatrix in einer Fluorverbindungsgas enthaltenden Atmosphäre, wodurch diese verglast wird, um einen Block aus synthetischem Quarzglas mit gegenüberliegenden Endflächen und einer äußeren peripheren Umfangsfläche mit einem Durchmesser zu bilden, und
(e) Erhitzen und Formen des verglasten Blocks zu einem Gegenstand aus synthetischem Quarzglas;

**dadurch gekennzeichnet, dass**
vor dem Erhitzungs- und Formschritt (e) ein Oberflächenteil des verglasten Blocks entfernt wird, der zumindest 5% des äußeren Umfangsdurchmessers ausmacht, sowie an jeder der gegenüberliegenden Endflächen zumindest 2,5 % der longitudinalen Länge dazwischen.

2. Verfahren nach Anspruch 1, wobei der Oberflächenteil, der von der äußeren Umfangsfläche entfernt wird, nicht mehr als 50 % des Durchmessers des verglasten Blocks ausmacht.

3. Verfahren nach Anspruch 2, wobei der Oberflächenteil, der von der äußeren Umfangsfläche entfernt wird, nicht mehr als 30 % des Durchmessers des verglasten Blocks ausmacht.

4. Verfahren nach einem der vorangegangenen Ansprüche, wobei der Oberflächenteil, der an den gegenüberliegenden Enden des verglasten Blocks entfernt wird, nicht mehr als 50 % seiner Länge ausmacht.

5. Verfahren nach Anspruch 4, wobei der Oberflächenteil, der an den gegenüberliegenden Enden des verglasten Blocks entfernt wird, nicht mehr als 30 % seiner Länge ausmacht.

6. Verfahren nach einem der vorangegangenen Ansprüche, wobei der Oberflächenteil durch Abschleifen und/oder Schneiden entfernt wird.

7. Verfahren nach einem der vorangegangenen Ansprüche, wobei der Quarzglasblock aus Schritt (e) wärmebehandelt, geschnitten und poliert wird, um den Gegenstand herzustellen, bei dem es sich um einen optischen Gegenstand für die Lithographie handelt.

**Revendications**

1. Procédé pour produire un article en verre de quartz synthétique fluoré, comprenant les étapes consistant à :

(a) introduire un gaz réactif formant de la silice, de l'hydrogène gazeux, de l'oxygène gazeux, et éventuellement un composé fluoré gazeux depuis un brûleur dans une zone de réaction ;
(b) hydrolyser à la flamme le gaz réactif formant de la silice dans la zone de réaction pour former de fines particules de silice ;
(c) déposer les particules de silice sur un substrat rotatif dans la zone de réaction pour former une matrice de silice poreuse ;
(d) chauffer la matrice de silice poreuse dans une atmosphère contenant un composé gazeux fluoré, en vitrifiant ainsi celle-ci pour former un lingot de verre de quartz synthétique ayant des surfaces d'extrémité opposées et une surface périphérique extérieure circonférentielle ayant un certain diamètre, et
(e) chauffer et façonner le lingot vitrifié en un article en verre de quartz synthétique ;

**caractérisé en ce qu'**avant l'étape de chauffage et de façonnage (e), une portion de surface du lingot vitrifié est retirée, laquelle représente au moins 5 % dudit diamètre périphérique extérieur et, à chacune desdites surfaces d'extrémité opposées, au moins 2,5 % de la longueur longitudinale entre eux.

2. Procédé selon la revendication 1, dans lequel la portion de surface retirée de la surface périphérique extérieure représente au plus 50 % du diamètre du lingot vitrifié.

3. Procédé selon la revendication 2, dans lequel la portion de surface retirée de la surface périphérique extérieure représente au plus 30 % du diamètre du lingot vitrifié.

4. Procédé selon l'une quelconque des revendications précédentes, dans lequel la portion de surface retirée aux extrémités opposées du lingot vitrifié représente au plus 50 % de sa longueur.

5. Procédé selon la revendication 4, dans lequel la portion de surface retirée aux extrémités opposées du lingot vitrifié représente au plus 30 % de sa longueur.

6. Procédé selon l'une quelconque des revendications précédentes, dans lequel la portion de surface est retirée par meulage et/ou découpage.

7. Procédé selon l'une quelconque des revendications précédentes, dans lequel le lingot de verre de quartz de l'étape (e) est traité à la chaleur, découpé et poli pour produire ledit article qui est un article optique pour lithographie.

# FIG.1

```
┌─────────────────────────┐
│     PROVIDE POROUS      │
│      SILICA MATRIX      │
└─────────────────────────┘
            ⇩
┌─────────────────────────┐
│    VITRIFY IN FLUORINE  │
│ COMPOUND GAS ATMOSPHERE │
└─────────────────────────┘
            ⇩
┌─────────────────────────┐
│   REMOVE INGOT SURFACE  │
└─────────────────────────┘
            ⇩
┌─────────────────────────┐
│         SHAPE           │
└─────────────────────────┘
            ⇩
┌─────────────────────────┐
│  HEAT TREAT , CUT , POLISH │
└─────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0055689 A